# EUROPÄISCHE PATENTSCHRIFT

(11) **EP 4 524 400 B1**
(45) Veröffentlichungstag und Bekanntmachung des Hinweises auf die Patenterteilung: **29.10.2025**
(21) Anmeldenummer: 24198654.6
(22) Anmeldetag: 05.09.2024
(51) Int. Cl.: F04B 49/06, F04B 51/00, F04D 15/00, F04D 27/00, F04D 27/02, F04D 29/66, F04C 28/28

(54) **VERFAHREN UND VORRICHTUNG ZUR STEUERUNG EINER STRÖMUNGSERZEUGUNGSEINRICHTUNG**
METHOD AND DEVICE FOR CONTROLLING A FLOW GENERATING DEVICE
PROCEDE ET DISPOSITIF DE COMMANDE D'UN DISPOSITIF DE PRODUCTION D'ECOULEMENT

(30) Priorität: 15.09.2023 DE 102023124932
(43) Veröffentlichungstag der Anmeldung: 19.03.2025
(73) Patentinhaber: ebm-papst Mulfingen GmbH & Co. KG, 74673 Mulfingen (DE)
(72) Erfinder: Menikheim, Christian, 97996 Niederstetten (DE)
(74) Vertreter: Rüger Abel Patentanwälte PartGmbB

(56) Entgegenhaltungen:
- WO-A2-2022/117615
- DE-A1- 102020 201 200
- GB-A- 2 255 421
- US-B2- 9 279 431

## Beschreibung

Die Erfindung betrifft ein Verfahren sowie eine Vorrichtung zur Steuerung einer Strömungserzeugungseinrichtung. Die Strömungserzeugungseinrichtung ist dazu eingerichtet, eine Fluidströmung, beispielsweise eine Flüssigkeitsströmung oder eine Gasströmung, zu erzeugen. Bei der Strömungserzeugungseinrichtung kann es sich beispielsweise um einen Kompressor, eine Pumpe oder einen Ventilator handeln.

Bei der Anwendung von Strömungserzeugungseinrichtungen kann es vorkommen, dass ein Drehmoment bzw. eine Last Schwankungen unterworfen ist. Wenn die Strömungserzeugungseinrichtung beispielsweise von einem Elektromotor angetrieben wird, kann es aufgrund der konstruktiven Ausgestaltung, insbesondere der Motorwicklung, zu Abweichungen von einem regelmäßigen (insbesondere sinusförmigen) räumlichen Verlauf des elektromagnetischen Flusses im Luftspalt und damit zu ungleichmäßigen Drehmomenten des Elektromotors kommen. Auch durch Lastveränderungen und Rückwirkungen in der erzeugten Fluidströmung kann das Drehmoment schwanken. Allgemein können solche Abweichungen und/oder Veränderungen des Drehmoments als Drehmomentwelligkeit bezeichnet werden. Eine solche Drehmomentwelligkeit wiederum kann hörbare Geräusche erzeugen, was unerwünscht ist.

Die Drehmomentwelligkeit, die durch Elektromotoren verursacht werden, ist allgemein bekannt. Beispielsweise schlägt WO 2022/117615 A2 vor, die Drehmomentwelligkeit zu ermitteln und die Ansteuerung eines Elektromotors zu korrigieren, um dadurch eine Drehmomentwelligkeit zu reduzieren. Hierzu können beispielsweise Phasenströme des Elektromotors ermittelt, wobei durch die Welligkeit des Drehmoments (Störwelle) die Minima und Maxima der Phasenströme unterschiedlich groß sind. Basierend auf der Störwelle wird eine Störwellenkorrekturanweisung generiert, um die Drehmomentwelligkeit zu glätten.

DE 10 2020 201 200 A1 offenbart ein Verfahren und eine Vorrichtung zur Kompensation von Oberwellen, beispielsweise in Kompressoren von Wärmepumpen. Ein Elektromotor des Kompressors wird feldorientiert geregelt. In dem feldorientierten System sind die oszillierenden Stromanteile ein Parameter für die im Zeitbereich vorhandene Welligkeit. Eine solche Welligkeit kann dann im Rahmen der feldorientierten Regelung kompensiert werden. Ein ähnliches Verfahren ist auch in DE 10 2019 122 218 A1 beschrieben.

Die aus DE 60 305 263 T2 bekannte elektrische Maschine weist mit unterschiedlich vorgegebenen Phasenströmen beaufschlagte Statorgruppen auf. Dabei werden elektromagnetische Kraftrückwirkungen sowie die Drehmomentübertragung der einzelnen Phasen berücksichtigt.

Zur Reduzierung der Drehmomentwelligkeit von bürstenlosen Elektromotoren ist im Stand der Technik auch vorgeschlagen, Statorwicklungen als Vollteilungswicklungen auszuführen (DE 10 2012 104 052 A1).

Weitere Druckschriften, die sich mit der Drehmomentwelligkeit von Elektromotoren befassen, sind DE 10 2020 201 203 A1 oder WO 2022/117274 A1.

Zur Reduzierung von Geräuschen von Elektromotoren wird ergänzend auf DE 10 2021 132 969 A1 und DE 10 2022 100 004 A1 hingewiesen.

Ausgehend vom Stand der Technik kann es als Aufgabe der vorliegenden Erfindung angesehen werden, die Geräuschentwicklung von Strömungserzeugungseinrichtungen, insbesondere elektromotorisch angetriebenen Strömungserzeugungseinrichtungen, weiter zu mindern und ein diesbezüglich verbessertes Verfahren bzw. eine verbesserte Vorrichtung zu schaffen.

Diese Aufgabe wird durch ein Verfahren mit den Merkmalen des Patentanspruches 1 sowie eine Vorrichtung mit den Merkmalen des Patentanspruches 14 gelöst.

Erfindungsgemäß werden ein Verfahren sowie eine Vorrichtung geschaffen, die zur Steuerung einer Strömungserzeugungseinrichtung eingerichtet sind. Die Strömungserzeugungseinrichtung ist zur Erzeugung einer Fluidströmung (Gasströmung und/oder Flüssigkeitsströmung) eingerichtet. Die Strömungserzeugungseinrichtung kann beispielsweise ein Kompressor, eine Pumpe oder ein Ventilator sein. Bei der Strömungserzeugungseinrichtung handelt es sich vorzugsweise um einen Kompressor. Die Strömungserzeugungseinrichtung (beispielsweise der Kompressor) kann Bestandteil einer Klimatisierungsanlage, Kühlanlage, Heizanlage oder dergleichen sein. Bei einem Ausführungsbeispiel kann der Kompressor dazu dienen, eine Flüssigkeitsströmung eines Kältemittels in einem Strömungskanal zu erzeugen.

Die Strömungserzeugungseinrichtung hat vorzugsweise eine antreibbare Strömungserzeugungseinheit - beispielsweise einen Rotor mit Ventilatorflügeln, eine Kompressoreinheit oder eine Pumpe. Außerdem hat die Strömungserzeugungseinrichtung einen Elektromotor, der zum Antreiben der Strömungserzeugungseinheit eingerichtet ist. Der Elektromotor kann über Steuerparameter, insbesondere elektrische und/oder elektronische Steuerparameter, angesteuert werden.

Die Vorrichtung weist außerdem wenigstens einen Sensor auf. Der wenigstens eine Sensor ist dazu eingerichtet, ein Sensorsignal zu erzeugen und bereitzustellen, das eine Vibration beschreibt. Die Vibration kann eine regelmäßige oder unregelmäßige Schwingung sein. Die Frequenz, die Periodendauer, die Amplitude der Vibration oder Schwingung kann zumindest zeitweise konstant sein oder variieren. Die Vibration kann eine Schallausbreitung (Luftschall und/oder Körperschall) bewirken. Die Vibration wird durch das Betreiben der Strömungserzeugungseinrichtung erzeugt und kann sich als Körperschall und/oder Luftschall weiter ausbreiten.

Die Vibration kann mit irgendeinem geeigneten Sensor erfasst werden, wie z.B. einem Mikrofon, einem Beschleunigungssensor, einem Piezosensor oder irgendeinem anderen Vibrations- und/oder Schwingungssensor. Alle bekannten Sensorarten zur Erfassung einer Vibration oder Schwingung können verwendet werden. Der wenigstens eine Sensor kann bei einem Ausführungsbeispiel am oder unmittelbar benachbart zu einem Gehäuse der Strömungserzeugungseinrichtung angeordnet sein. Zusätzlich oder alternativ kann der wenigstens eine Sensor stromabwärts der Strömungserzeugungseinrichtung an einem Strömungskanal (z.B. einem Rohr) oder unmittelbar benachbart dazu angeordnet sein, um eine Vibration durch eine Anregung des Strömungskanals beim Betreiben der Strömungserzeugungseinrichtung zu erfassen. Die Anzahl der verwendeten Sensoren zur Erfassung der Vibration, die durch das Betreiben der Strömungserzeugungseinrichtung entsteht, kann variieren. Es können auch mehrere Sensoren an unterschiedlichen Positionen bzw. Erfassungsstellen eingesetzt werden, um die erzeugte Vibration möglichst exakt bestimmen zu können. Das Verwenden von mehreren Sensoren kann auch den Vorteil mit sich bringen, dass die Ursache einer Schwingung ermittelt werden kann.

Das wenigstens eine Sensorsignal, das die verursachte Vibration beschreibt, stellt einen Eingangsparameter dar. Wenigstens ein zusätzlicher Eingangsparameter beschreibt einen aktuellen Arbeitspunkt der Strömungserzeugungseinrichtung. Der Arbeitspunkt kann durch einen oder mehrere elektrische und/oder mechanische Parameter definiert sein. Beispielsweise kann der Arbeitspunkt einer Strömungserzeugungseinrichtung von einem oder mehreren elektrischen Parametern eines Elektromotors der Strömungserzeugungseinrichtung definiert sein, wie etwa ein Motorstrom und/oder eine Motorspannung und/oder eine Frequenz des Motorstromes bzw. der Motorspannung und/oder eine Amplitude des Motorstromes bzw. der Motorspannung. Es sei an dieser Stelle darauf hingewiesen, dass der Motorstrom und/oder die Motorspannung entsprechend der Anzahl der Phasen des Elektromotors mehrere Phasenströme und/oder Phasenspannungen umfassen kann, beispielsweise drei Phasenströme und drei Phasenspannungen für einen dreiphasigen Elektromotor.

Erfindungsgemäß wird ein Parameterzusammenhang zwischen den Eingangsparametern (wenigstens ein Sensorsignal, Arbeitspunkt und optional weitere Eingangsparameter) einerseits und wenigstens einem Steuerparameter für die Strömungserzeugungseinrichtung und vorzugsweise für den Elektromotor der Strömungserzeugungseinrichtung andererseits bestimmt. Das Bestimmen eines solchen Parameterzusammenhangs kann das Generieren eines solche Parameterzusammenhangs, das Auswählen eines geeigneten Parameterzusammenhangs aus einer Gruppe von vorgegebenen Parameterzusammenhängen oder das Prüfen und optionale Aktualisieren eines Parameterzusammenhangs sein. Auch eine Kombination der vorstehenden Möglichkeiten kann realisiert werden.

Bei der Bestimmung des Zusammenhangs zwischen den Eingangsparametern und dem wenigstens einen Steuerparameter können Methoden oder Systeme einer künstlichen Intelligenz (KI) eingesetzt werden, insbesondere Methoden und Algorithmen des maschinellen Lernens. Beispielsweise können künstliche neuronale Netze, Stützvektormaschinen (Support Vector Machines, SVM) oder andere bekannte KI-Systeme zum Einsatz kommen. Das maschinelle Lernen kann überwacht sein, kann nicht überwacht sein oder kann bestärkendes maschinelles Lernen sein. Das maschinelle Lernen kann insbesondere in Form von "Deep Learning" realisiert sein. Ein KI-System kann alle bekannten Methoden und/oder Algorithmen einer künstlichen Intelligenz (KI) verwenden, wie etwa Methoden und Algorithmen wissensbasierter Systeme und/oder der Musteranalyse und/oder der Mustererkennung und/oder der Mustervorhersage und/oder des maschinellen Lernens.

Nach dem Bestimmen des Parameter zusammenhangs zwischen Eingangsparametern und dem wenigstens einen Steuerparameter kann dann basierend auf diesem Parameterzusammenhang der Steuerparameter ermittelt und zur Steuerung der Strömungserzeugungseinrichtung, insbesondere deren Elektromotor, verwendet werden. Der Steuerparamater wird dabei anhand des Parameterzusammenhangs so gebildet, dass die erfasste Vibration reduziert oder eliminiert wird. Beispielsweise kann ein einem Motorstrom und/oder einer Motorspannung ein Wechselstromsignal bzw. ein Wechselspannungssignal überlagert werden, um die sich durch eine Drehmomentwelligkeit der Strömungserzeugungseinrichtung verursache Vibration zumindest reduzieren. Um dies zu erreichen kann der Parameterzusammenhang beispielsweise basierend auf Simulationsdaten und/oder in einem Prüfstand generierte Messdaten einer Strömungserzeugungseinrichtung und/oder zuvor gesammelte Betriebsdaten und/oder anderen Musterdaten und/oder Modellen ermittelt werden. Solche Daten sind vorzugsweise nicht abschließend oder unveränderlich, sondern können kontinuierlich ergänzt und/oder teilweise gelöscht und/oder verändert werden, insbesondere wenn KI-Systeme oder KI-Methoden eingesetzt werden.

Basierend auf der Erfindung findet eine ständige Optimierung dadurch statt, dass der Parameterzusammenhang zwischen den Eingangsparametern dem wenigstens einen Steuerparameter wiederholt ermittelt wird. Er kann dadurch an sich verändernde Bedingungen angepasst werden, die sich beispielsweise aus Alterungserscheinungen ergeben. Solche Alterungserscheinungen können Verschleiß und/oder Verschmutzung in der Strömungserzeugungseinrichtung und/oder sich verändernde Rand- oder Umgebungsbedingungen sein. Beispielsweise kann sich durch Alterungseffekte auch die Viskosität eines Fluids der Fluidströmung ändern. Insbesondere betrifft die Alterung bzw. der Verschleiß auch Schwingungen dämpfende und/oder absorbierende Komponenten der Strömungserzeugungseinrichtung, wie z.B. Gummifüße oder andere Dämpfungselemente, auf denen ein Strömungserzeuger (z.B. Kompressor) angeordnet ist, sowie auch optional vorhandene andere Luft- oder Körperschall dämpfende und/oder absorbierende Komponenten.

Der Parameterzusammenhang zwischen den Eingangsparametern und dem wenigstens einen Steuerparameter ist nicht unveränderlich vorgegeben, sondern vielmehr adaptiv. Er wird basierend auf den Eingangsparametern angepasst. Der sich aus dem Parameterzusammenhang ergebende wenigstens eine Steuerparameter ist somit ebenfalls adaptiv und kann die Geräuschentwicklung einer Strömungserzeugungseinrichtung, die insbesondere durch eine Drehmomentwelligkeit eines Elektromotors verursacht werden kann, optimal reduzieren und im Idealfall eliminieren.

Der Parameter zusammenhang zwischen den Eingangsparametern und dem wenigstens einen Steuerparameter kann zeitbasiert und/oder ereignisbasiert wiederholt ermittelt werden, also beispielsweise in regelmäßigen Zeitabständen und/oder dann, wenn ein vorgegebenes Ereignis eintritt. Dieses Ereignis kann beispielsweise die Überschreitung eines vorgegebenen Geräuschpegels und/oder Vibrationsschwellenwertes, der durch das wenigstens eine Sensorsignal beschriebenen Vibration sein. Zusätzlich oder alternativ kann dieses Ereignis auch eine Anzahl von Starts der Strömungserzeugungseinrichtung bzw. des Strömungserzeugers (z.B. Kompressor) sein. Es kann beispielsweise nach einer vorgegebenen Anzahl von Starts jeweils der Parameterzusammenhang ermittelt werden, z.B. zumindest nach dem ersten Start und dann jeweils nach einer vorgegebenen Anzahl weiterer Starts.

Zusätzlich oder alternativ kann die Ermittlung des Parameter zusammenhangs auch durch einen externen Befehl, z.B. automatisch veranlasst von einer externen Recheneinheit (z.B. Cloud-Service) oder manuell veranlasst durch eine Bedienperson, mittels einer geeigneten Bedienschnittstelle. Zusätzlich oder alternativ kann die Ermittlung des Parameterzusammenhangs auch aber auch von Intern, z.B. nach dem 1. Start (bzw. beim 10. Start, der dann auf jeden Fall beim Endkunden ist)

Es ist beispielsweise möglich, den Parameterzusammenhang mittels eines Optimierungsverfahrens zu ermitteln. Zum Beispiel können dazu mathematische Optimierungsfunktionen verwendet werden, wie etwa ein Gradientenverfahren, ein konjugiertes Gradientenverfahren, Downhill-Simplex-Verfahren (auch Nelder-Mead-Verfahren genannt), Quasi-Newton-Verfahren, Newton-Verfahren, etc. Zur Lösung des Optimierungsproblems können, wie erwähnt, auch Systeme und Methoden des Maschinenlernens bzw. der künstlichen Intelligenz (KI) eingesetzt werden. Ziel des Optimierungsverfahrens kann insbesondere das Minimieren des Schalldrucks oder Schalldruckpegels insgesamt und/oder bei einer oder bei mehreren definierten Frequenzen sein.

Der Parameterzusammenhang zwischen den Eingangsparametern und dem wenigstens einen Steuerparameter sowie der wenigstens eine Steuerparameter werden in der erfindungsgemäßen Vorrichtung bzw. beim erfindungsgemäßen Verfahren mittels einer Steuereinrichtung ermittelt, wobei die Steuereinrichtung eine Steuereinheit der Strömungserzeugungseinrichtung und/oder eine entfernt von der Strömungserzeugungseinrichtung angeordnete und mit der Strömungserzeugungseinrichtung kommunikationsverbundene Recheneinheit sein kann. Eine solche Recheneinheit kann beispielsweise durch einen Internetdienst (Cloud-Service) realisiert sein. Über einen solchen Cloud-Service können Rechenkapazität und/oder Speicherkapazität und/oder Daten bereitgestellt werden, die beim Ermitteln des Parameterzusammenhangs und/oder des Steuerparameters verwendet werden können. Solche Daten können auch Daten sein, die beim maschinellen Lernen verwendet werden können, wie etwa Trainingsdaten und/oder Betriebsdaten und/oder Expertenwissen, usw. Die Recheneinrichtung bzw. der Cloud-Service kann zum Beispiel mit mehreren Strömungserzeugungseinrichtungen kommunikationsverbunden sein und somit auf die Betriebsdaten dieser Strömungserzeugungseinrichtungen zurückgreifen. Dadurch kann eine große Datenbasis für maschinelles Lernen bereitgestellt werden von der auch Strömungserzeugungseinrichtungen profitieren können, die lediglich eine kurze Betriebsdauer seit ihrer ersten Inbetriebnahme aufweisen.

Bei dem Parameterzusammenhang kann es sich beispielsweise um eine Parametermatrix handeln. Die Matrixelemente dieser Parametermatrix können die Eingangsparameter mit dem Steuerparameter oder den Steuerparametern verknüpfen. Die Anzahl der Matrixelemente kann dabei n x m sein, wenn n die Anzahl der Steuerparameter und m die Anzahl der Eingangsparameter ist. Existiert lediglich ein einziger Steuerparameter, gilt n = 1, so dass es sich bei der Parametermatrix um einen Vektor handelt.

Über die Matrixelemente der Parametermatrix ist es möglich, jeden Eingangsparameter mit jedem Steuerparameter zu verknüpfen. Besteht zwischen einem Eingangsparameter und einem Steuerparameter kein Zusammenhang oder zumindest kein relevanter Zusammenhang, kann das Matrixelement gleich Null vorgegeben sein. Jedes individuelle Matrixelement kann allgemein einen beliebigen mathematischen und/oder logischen Zusammenhang zwischen jeweils einem Eingangsparameter und jeweils einem Steuerparameter beschreiben.

Alternativ zu einer Parametermatrix kann der Zusammenhang zwischen den Eingangsparametern und dem wenigstens einen Steuerparameter auch durch ein künstliches neuronales Netz beschrieben werden.

Vorteilhafte Ausgestaltungen der Erfindung ergeben sich aus den abhängigen Ansprüchen, der Beschreibung und der Zeichnung. Nachfolgend werden anhand der Zeichnung vorteilhafte Ausführungsbeispiele der Erfindung im Einzelnen erläutert. In der Zeichnung zeigen:
Figuren 1 und 2 jeweils ein Blockschaltbild eines Ausführungsbeispiels einer erfindungsgemäßen Vorrichtung aufweisend wenigstens eine Strömungserzeugungseinrichtung,
Figur 3 eine flussdiagrammähnliche Darstellung zur Ermittlung wenigstens eines Steuerparameters zur Steuerung einer Strömungserzeugungseinrichtung der Vorrichtung gemäß der Figuren 1 oder 2,
Figur 4 ein Ausführungsbeispiel eines Parameterzusammenhangs zwischen Eingangsparametern und dem wenigstens einen Steuerparameter in Form einer Parametermatrix und
Figur 5 ein Flussdiagramm eines Ausführungsbeispiels eines erfindungsgemäßen Verfahrens.

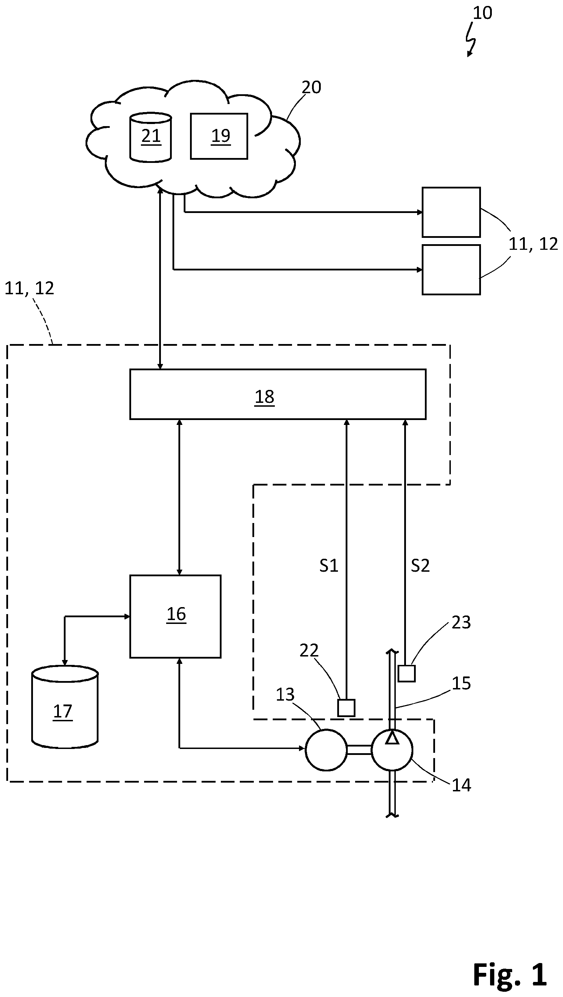

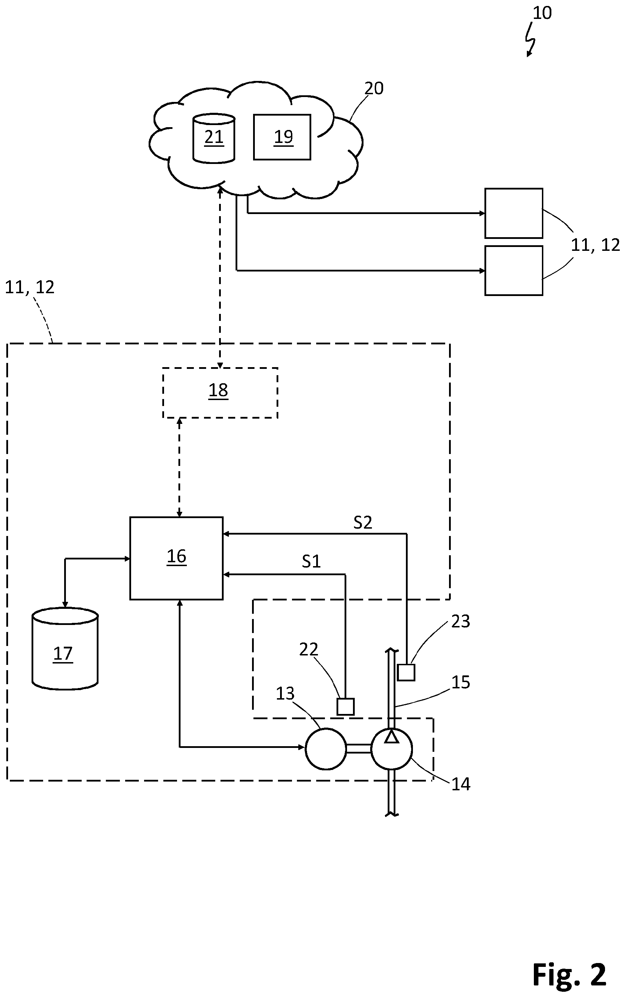

In den Figuren 1 und 2 ist jeweils ein Blockschaltbild eines Ausführungsbeispiels einer Vorrichtung 10 in stark schematisierter Weise dargestellt. Die Vorrichtung 10 hat eine Strömungserzeugungseinrichtung 11 zur Erzeugung einer Fluidströmung, bei der es sich um Gasströmung oder eine Flüssigkeitsströmung handeln kann.

Bei dem hier veranschaulichten Ausführungsbeispiel ist die Strömungserzeugungseinrichtung 11 als Kompressor 12 ausgeführt. Der Kompressor 12 hat einen Elektromotor 13 und eine von dem Elektromotor 13 antreibbare Kompressoreinheit 14. Beim Betrieb des Elektromotors 13 erzeugt die Kompressoreinheit 14 in einem Strömungskanal 15 eine Flüssigkeitsströmung. Alternativ zu dem Kompressor 12 können auch andere Strömungserzeugungseinrichtungen 11 eingesetzt werden, wie beispielsweise eine Pumpe oder ein Ventilator.

Die Strömungserzeugungseinrichtung 11 hat außerdem eine Steuereinheit 16 zur Steuerung des Elektromotors 13. Die Steuereinheit 16 kann auch als Anbaueinheit oder Einbaueinheit in den Elektromotor 13 integriert sein. Die Steuereinheit 16 kann beispielsweise ein Mikroprozessor oder eine andere elektrische und/oder elektronische Steuerung sein, die dazu eingerichtet ist, Programmbefehle zur Steuerung des Elektromotors 13 auszuführen. Hierzu kann die Steuereinheit 16 mit einem Speicher 17 kommunikationsverbunden sein, indem ein Programm und/oder zur Steuerung verwendete Parameter und/oder Daten abgespeichert sein können.

Optional kann die Strömungserzeugungseinrichtung 11 eine Kommunikationsschnittstelle 18 aufweisen, die Bestandteil der Steuereinheit 16 sein kann oder mit der die Steuereinheit 16 kommunikationsverbunden ist. Mittels der Kommunikationsschnittstelle 18 kann die Strömungserzeugungseinrichtung 11 mit einer externen Recheneinrichtung 19 kommunikationsverbunden sein. Die externe Recheneinrichtung 19 kann einen Teil der Steueraufgaben zur Steuerung der Strömungserzeugungseinrichtung 11 (hier: Kompressor 12) und insbesondere des Elektromotors 13 übernehmen.

Es ist auch möglich, dass die externe Recheneinrichtung 19 sämtliche Steuerungsaufgaben übernimmt und die Steuereinheit 16 entfallen kann. Es ist optional auch möglich, dass der Speicher 17 mittelbar über die Steuereinheit 16 oder unmittelbar mit der Kommunikationsschnittstelle 18 kommunikationsverbunden ist.

Die externe Recheneinrichtung 19 kann beispielsweise in Form eines Internetdienstes bzw. Cloud-Service 20 bereitgestellt werden. Hierzu kann eine Kommunikationsverbindung zwischen der Kommunikationsschnittstelle 18 und dem Cloud-Service 20 hergestellt werden, beispielsweise eine drahtlose und/oder drahtgebundene Internetverbindung gemäß einem Standard-Kommunikationsprotokoll. Der Cloud-Service 20 kann neben der Rechenleistung der Recheneinrichtung 19 auch Speicherkapazitäten in Form eines Cloud-Speichers 21 bereitstellen. Die Recheneinrichtung 19 und/oder der Cloud-Speicher 21 und/oder der Cloud-Service 20 können mit mehreren identisch oder ähnlich aufgebauten Strömungserzeugungseinrichtungen 11 bzw. Kompressoren 12 kommunikationsverbunden sein, wie es schematisch in den Figuren 1 und 2 dargestellt ist.

Die Vorrichtung 10 weist für jede Strömungserzeugungseinrichtung 11 wenigstens einen Sensor auf. Beispielhaft sind in den Figuren 1 und 2 ein erster Sensor 22 und ein zweiter Sensor 23 dargestellt. Jeder Sensor 22, 23 ist dazu eingerichtet, ein Sensorsignal S1, S2 bereitzustellen, das eine Vibration beschreibt. Beispielsgemäß erzeugt der ersten Sensor 22 ein erstes Sensorsignal S1 und der zweiten Sensor 23 ein zweites Sensorsignal S2. Die Vibration wird durch den Betrieb der Strömungserzeugungseinrichtung 11 unmittelbar an der Strömungserzeugungseinrichtung 11 und/oder einer damit mechanisch und/oder fluidisch verbundenen Komponente erzeugt, wie z.B. dem Strömungskanal 15.

Jeder der Sensoren 22, 23 kann die Vibration nach einem geeigneten physikalischen Prinzip messen, beispielsweise durch die Vibration verursachten Schall (Körperschall und/oder Luftschall). Zumindest einer der Sensoren 22, 23 kann ein berührungslos messender Sensor sein, beispielsweise ein Mikrofon oder ein Vibrometer. Zumindest einer der Sensoren 22, 23 kann ein berührend messender Sensor sein, beispielsweise ein Beschleunigungssensor bzw. Piezosensor. Die Sensoren 22, 23 können auf demselben oder auf unterschiedlichen physikalischen Messprinzipien beruhen. Die Anzahl der Sensoren 22, 23 kann abhängig von der Ausgestaltung der Strömungserzeugungseinrichtung 11 und der damit verbundenen die Fluidströmung leitenden Teile (z.B. Strömungskanal 15) variieren. Wenn mehrere Sensoren 22, 23 vorhanden sind, können diese an unterschiedlichen Messstellen angeordnet sein. Beispielsgemäß ist der erste Sensor 22 unmittelbar an einem Gehäuse der Strömungserzeugungseinrichtung 11 angeordnet. Der zweite Sensor 23 kann unmittelbar am Strömungskanal 15 angeordnet sein.

Bei dem in Figur 1 dargestellten Ausführungsbeispiel werden die Sensorsignale S1, S2, die die von der Strömungserzeugungseinrichtung 11 verursachte Vibration beschreiben, der Kommunikationsschnittstelle 18 bereitgestellt. Über die Kommunikationsschnittstelle 18 können die Sensorsignale S1, S2 dem Cloud-Service 20 bzw. der externen Recheneinrichtung 19 bereitgestellt werden. Optional zusätzlich können die Sensorsignale S1, S2 unmittelbar oder über die Kommunikationsschnittstelle 18 der Steuereinheit 16 bereitgestellt werden.

Das Ausführungsbeispiel der Vorrichtung 10 gemäß Figur 2 entspricht im Wesentlichen dem Ausführungsbeispiel der Vorrichtung 10 aus Figur 1. Der Unterschied besteht darin, dass beim Ausführungsbeispiel nach Figur 2 die Sensorsignale S1, S2 unmittelbar der Steuereinheit 16 bereitgestellt werden. Die Kommunikationsschnittstelle 18 und die damit kommunikationsverbundene externe Recheneinrichtung 19 bzw. der Cloud-Service 20 können optional vorhanden sein, aber auch entfallen. Ansonsten kann das Ausführungsbeispiel gemäß Figur 2 dem Ausführungsbeispiel nach Figur 1 entsprechend realisiert sein, so dass auf die vorstehende Beschreibung verwiesen werden kann.

Abhängig von der Ausführungsform können Steuerfunktionen der Strömungserzeugungseinrichtung 11 entweder ausschließlich durch die interne Steuereinheit 16 oder ausschließlich durch die externe Recheneinrichtung 19 oder in Zusammenarbeit der internen Steuereinheit 16 mit der externen Recheneinrichtung 19 übernommen werden. Somit kann eine Steuereinrichtung der Vorrichtung 10 nur durch die Steuereinheit 16, nur durch die Recheneinheit 19 oder durch eine Kombination der Steuereinheit 16 mit der Recheneinrichtung 19 realisiert sein. Im Folgenden soll der Verweis auf die Steuereinrichtung 16, 19 sämtliche Realisierungsformen umfassen.

Der Steuereinrichtung 16, 19 wird das wenigstens eine Sensorsignal S1, S2 des wenigstens einen Sensors 22, 23 bereitgestellt, der die Vibration beschreibt, die von der Strömungserzeugungseinrichtung 11 verursacht wird. Zusätzlich erhält die Steuereinrichtung 16, 19 Daten, die einen Arbeitspunkt AP beschreiben, an dem die Strömungserzeugungseinrichtung 11 aktuell betrieben wird. Der Arbeitspunkt AP kann durch Parameter angegeben werden, die in der Steuereinrichtung 16, 19 bekannt sind und/oder die in der Steuereinrichtung 16, 19 zur Ansteuerung des Elektromotors 13 ermittelt werden und/oder die sensorisch erfasst werden. Den Arbeitspunkt AP beschreibende Parameter können in beliebiger Anzahl und beliebiger Kombination einer oder mehrere der folgende Parameter sein:
- ein aktueller Betrag oder Wert einer Motorspannung des Elektromotors 13;
- ein aktueller Betrag oder Wert eines Motorstroms des Elektromotors 13;
- ein Lastwinkel des Elektromotors 13;
- eine Drehzahl des Elektromotors 13;
- ein Drehmoment des Elektromotors 13;
- eine zeitliche Ableitung einer oder mehrerer der vorgenannten Parameter.

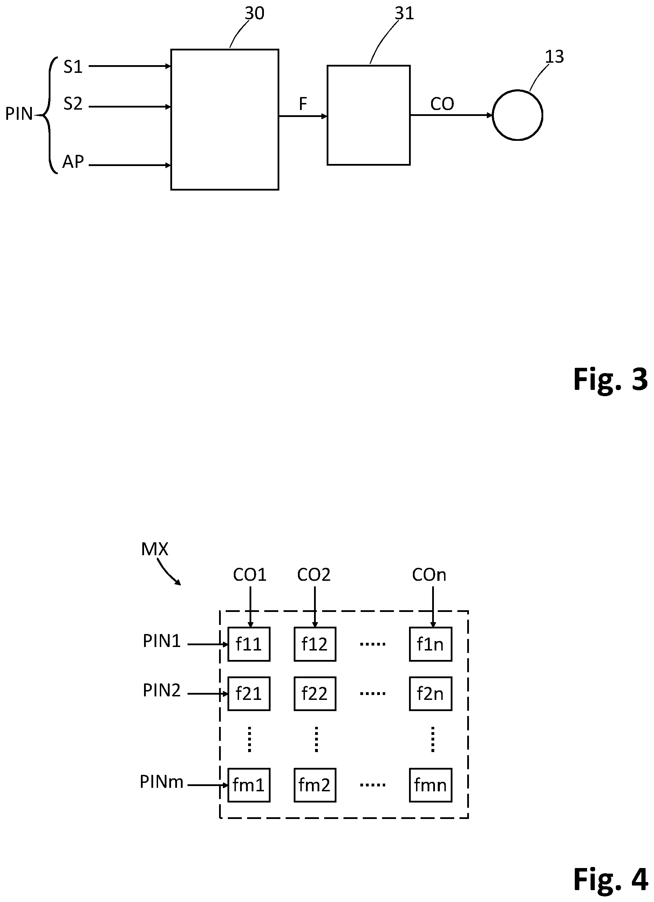

Das wenigstens eine Sensorsignal S1, S2 und der wenigstens eine Parameter, der den Arbeitspunkt AP beschreibt, sind in Eingangsparametern PIN enthalten, die der Steuereinrichtung 16, 19 bereitgestellt werden. Die Steuereinrichtung 16, 19 ist dazu eingerichtet, aus diesen Eingangsparametern PIN einen Parameterzusammenhang F zu ermitteln, der die Eingangsparameter PIN mit wenigstens einem Steuerparameter CO verknüpft. Das Ermitteln dieses Parameterzusammenhangs F ist in Figur 3 schematisch durch den ersten Funktionsblock 30 veranschaulicht. Der Zusammenhang F kann durch einen mathematischen Zusammenhang, ein Kennfeld, eine oder mehrere Tabellen oder auch durch Strukturen der künstlichen Intelligenz (KI), wie beispielsweise ein künstliches neuronales Netz, dargestellt werden. Beispielhaft ist in Figur 4 ein Parameterzusammenhang F in Form einer Parametermatrix MX dargestellt, der die Eingangsparameter PIN (PIN1, PIN2, ..., PINm mit einem oder mehreren Steuerparametern CO (CO1, CO2, ..., COn) verknüpft. Diese Parametermatrix MX kann eine einfache und flexible Möglichkeit darstellen, um die Eingangsparameter PIN mit dem wenigstens einen Steuerparameter CO zu verknüpfen und die Anzahl der Matrixelemente fij (i = 1, 2, ..., m und j = 1, 2, ..., n) hängt von der Anzahl m der Eingangsparameter PIN und der Anzahl n der Steuerparameter CO ab. Es ist dabei möglich, dass wenigstens einer der Steuerparameter CO auch einen Eingangsparameter PIN darstellt, insbesondere einen der Parameter, der den Arbeitspunkt AP beschreibt.

Die Matrixelemente fij der Parametermatrix MX oder allgemein gesprochen der Parameterzusammenhang F ist nicht unveränderlich, sondern adaptiv und kann sich beispielsweise an veränderte äußere Umstände oder Randbedingungen anpassen. Beispielsweise kann durch Alterungseffekte, wie etwa Verschleiß oder Verschmutzung der Strömungserzeugungseinrichtung 11, ein veränderter Zusammenhang F zwischen den Eingangsparametern PIN und dem wenigstens einen Steuerparameter CO entstehen. Dies kann erkannt werden, indem sich das wenigstens eine Sensorsignal S1, S2, das die verursachte Vibration beschreibt, sich an einem oder mehreren Arbeitspunkten AP der Strömungserzeugungseinrichtung 11 verändert. An einem oder mehreren Arbeitspunkten AP kann daher die sensorisch erfasste Vibration eine veränderte Charakteristik aufweisen, beispielsweise eine veränderte Amplitude und/oder eine veränderte Frequenz. Auf derartige Veränderungen kann erfindungsgemäß reagiert werden, weil der Zusammenhang F adaptiv ist. Bei dem hier in Figur 4 gezeigten Ausführungsbeispiel des Parameterzusammenhangs F in Form einer Parametermatrix MX sind die Matrixelemente fij variabel und können individuell verändert werden, wodurch sich der Parameterzusammenhang F zwischen einem oder mehreren der Eingangsparameter PIN und einem oder mehrere der Steuerparameter CO anpassen lässt. Jedes Matrixelement fij verknüpft beim Ausführungsbeispiel genau einen Eingangsparameter PINi mit genau einem Steuerparameter COj. Wenn zwischen einem Eingangsparameter PINi und dem zugeordneten Steuerparameter COj kein Zusammenhang besteht, kann das betreffende Matrixelement auch auf den Wert "Null" festgelegt werden. Die Matrixelemente fij können allgemein einen beliebige mathematischen und/oder logischen Zusammenhang (linear, nicht linear, stetig, unstetig, usw.) beschreiben.

Somit kann basierend auf dem Parameterzusammenhang F der wenigstens eine Steuerparameter CO ermittelt werden, was in Figur 3 schematisch durch den zweiten Funktionsblock 31 veranschaulicht ist. Der wenigstens eine Steuerparameter CO kann anschließend dazu verwendet werden, die Strömungserzeugungseinrichtung 11 und beispielsgemäß den Elektromotor 13 zu steuern.

Als Steuerparameter CO können insbesondere ein oder mehrere der folgenden Parameter gewählt werden:
- ein aktueller Betrag oder Wert einer Motorspannung des Elektromotors 13;
- ein aktueller Betrag oder Wert eines Motorstroms des Elektromotors 13;
- eine Frequenz der Motorspannung und/oder des Motorstroms;
- eine Amplitude der Motorspannung und/oder des Motorstroms;
- eine zeitliche Ableitung irgendeines vorgenannten Steuerparameters.

Bei der Ermittlung des Parameterzusammenhangs F und/oder des wenigstens einen Steuerparameters CO kann durch die Steuereinrichtung 16, 19 auf Methoden und/oder Strukturen der künstlichen Intelligenz (KI) zurückgegriffen werden. Beispielsweise können bei der Ermittlung des Zusammenhangs F und/oder des wenigstens einen Steuerparameters CO, KI-Strukturen und/oder KI-Verfahren eingesetzt werden, wie etwa wissensbasierte Systeme, maschinelles Lernen, insbesondere "Deep Learning". Hierzu kann die Steuereinrichtung 16, 19 KI-Strukturen aufweisen, wie etwa ein künstliches neuronales Netz (KNN) und/oder eine Stützvektormaschine (SVM). Es können sämtliche bekannte KI-Verfahren und/oder KI-Systeme eingesetzt werden.

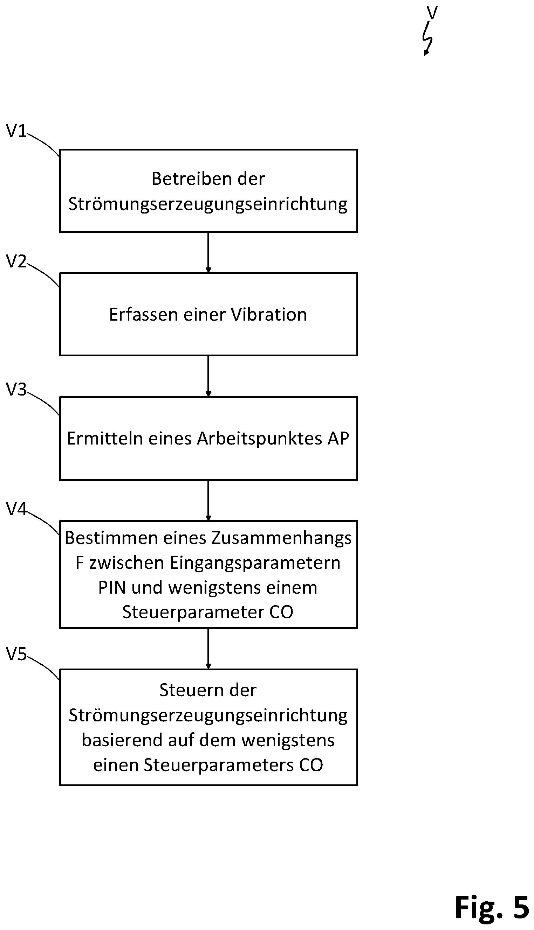

In Figur 5 ist ein Ausführungsbeispiel eines erfindungsgemäßen Verfahrens V dargestellt, das beispielsweise unter Verwendung der Steuereinrichtung 16, 19 ausgeführt werden kann.

In einem ersten Verfahrensschritt V1 wird die Strömungserzeugungseinrichtung 11 (beispielsgemäß der Kompressor 12) betrieben und eine Fluidströmung erzeugt. Durch den Betrieb der Strömungserzeugungseinrichtung 11 entsteht eine Vibration, die von dem wenigstens einen Sensor 22, 23 erfasst werden kann (zweiter Verfahrensschritt V2).

In einem dritten Verfahrensschritt V3 wird der Arbeitspunkt AP der Strömungserzeugungseinrichtung 11 ermittelt, der durch einen oder mehrere elektrische und/oder mechanische Parameter charakterisiert werden kann, beispielsweise die elektrischen Betriebsparameter des Elektromotors 13.

Der zweite Verfahrensschritt V2 und der dritte Verfahrensschritt V3 können in einer beliebigen Reihenfolge hintereinander oder zeitlich parallel zueinander ausgeführt werden.

Basierend auf dem Arbeitspunkt AP und dem wenigstens einen Sensorsignal S1, S2 und optional einem oder mehreren Eingangsparametern PIN wird ein Parameterzusammenhang F zwischen den Eingangsparametern PIN und dem wenigstens einen Steuerparameter CO ermittelt (vierter Verfahrensschritt V4). Der Parameterzusammenhang F kann dabei aus einer Vielzahl von bereitgestellten Parameterzusammenhängen F ausgewählt und/oder basierend auf einem vorgegebenen Parameterzusammenhang F verändert und/oder auf irgendeiner anderen geeigneten Weise ermittelt werden. Es ist dabei möglich, den aktuell verwendeten Parameterzusammenhang F zeitgesteuert und/oder ereignisgesteuert zu prüfen und gegebenenfalls anzupassen.

Der Parameterzusammenhang F wird derart ermittelt bzw. ist derart optimiert, dass verursachte Vibrationen reduziert oder eliminiert werden. Das Ermitteln des Parameterzusammenhangs F kann auf Mustern und/oder Modellen und/oder Simulationsergebnissen und/oder empirisch ermittelten Daten beruhen, die charakteristisch sind für den Arbeitspunkt AP, an dem die Strömungserzeugungseinrichtung 11 aktuell betrieben wird und die die dabei entstehenden Vibration minimieren.

Basierend auf dem ermittelten Parameterzusammenhang F wird dann der wenigstens eine Steuerparameter CO abhängig von den Eingangsparametern PIN ermittelt (vierter Verfahrensschritt V4).

Schließlich wird in einem fünften Verfahrensschritt V5 der ermittelte wenigstens eine Steuerparameter CO verwendet, um die Strömungserzeugungseinrichtung 11 zu steuern, insbesondere den Elektromotor 13.

Die Erfindung betrifft ein Verfahren V und eine Vorrichtung 10 zur Steuerung einer Strömungserzeugungseinrichtung 11, insbesondere eines Kompressors 12. Beim Betreiben der Strömungserzeugungseinrichtung 11 wird eine Vibration und/oder eine Schwingung erzeugt, die mittels wenigstens eines Sensors 22, 23 erfasst und durch wenigstens ein Sensorsignal S1, S2 beschrieben wird. In einer Steuereinrichtung 16, 19 wird basierend auf dem wenigstens einen Sensorsignal S1, S2 und einem aktuellen Arbeitspunkt AP der Strömungserzeugungseinrichtung 11 ein Zusammenhang F zwischen Eingangsparametern PIN und wenigstens einem Steuerparameter CO ermittelt. Der Zusammenhang F kann beispielsweise eine Parametermatrix MX oder irgendeine andere mathematische und/oder logische Struktur sein, die die Eingangsparameter PIN mit dem wenigstens einen Steuerparameter CO verknüpft, beispielsweise eine adaptive bzw. durch maschinelles Lernen veränderbare logische Struktur. Dadurch können sich ändernde Umstände, insbesondere Alterungseffekte, berücksichtigt werden. Der basierend auf dem Zusammenhang F ermittelte wenigstens eine Steuerparameter CO wird für die Steuerung der Strömungserzeugungseinrichtung 11, insbesondere eines Elektromotors 13, verwendet.

### Bezugszeichenliste:

- 10: Vorrichtung
- 11: Strömungserzeugungseinrichtung
- 12: Kompressor
- 13: Elektromotor
- 14: Kompressoreinheit
- 15: Strömungskanal
- 16: Steuereinheit
- 17: Speicher
- 18: Kommunikationsschnittstelle
- 19: Recheneinrichtung
- 20: Cloud-Service
- 21: Cloud-Speicher
- 22: erster Sensor
- 23: zweiter Sensor

- 30: erster Funktionsblock
- 31: zweiter Funktionsblock

- AP: Arbeitspunkt
- CO: Steuerparameter
- F: Parameterzusammenhang
- fij: Matrixelement
- MX: Parametermatrix
- PIN: Eingangsparameter
- S1: erstes Sensorsignal
- S2: zweites Sensorsignal
- V: Verfahren
- V1: erster Verfahrensschritt
- V2: zweiter Verfahrensschritt
- V3: dritter Verfahrensschritt
- V4: vierter Verfahrensschritt
- V5: fünfter Verfahrensschritt

## Patentansprüche

1. Verfahren (V) zur Steuerung einer Strömungserzeugungseinrichtung (11), insbesondere eines Kompressors (12), umfassend:
- Betreiben der Strömungserzeugungseinrichtung (11) zur Erzeugung einer Fluidströmung,
- Erfassen einer Vibration mittels wenigstens einen Sensors (22, 23) und Bereitstellen wenigstens eines die Vibration beschreibenden Sensorsignals (S1, S2),
- Ermitteln eines Arbeitspunktes (AP) der Strömungserzeugungseinrichtung (11),
- Bestimmen eines Zusammenhangs (F) zwischen Eingangsparametern (PIN) und wenigstens einem Steuerparameter (CO), wobei die Eingangsparameter (PIN) das wenigstens eine Sensorsignal (S1, S2) und den Arbeitspunkt (AP) aufweisen,
- Ermitteln und Verwenden des wenigstens einen Steuerparameters (CO) für die Steuerung der Strömungserzeugungseinrichtung (11).

2. Verfahren nach Anspruch 1, wobei der Sensor (22, 23) oder einer der vorhandenen Sensoren (22, 23) ein Mikrofon oder ein Schwingungssensor ist.

3. Verfahren nach Anspruch 1 oder 2, wobei der Sensor (22) oder einer der vorhandenen Sensoren (22, 23) am oder benachbart zu der Strömungserzeugungseinrichtung (11) angeordnet ist.

4. Verfahren nach einem der vorhergehenden Ansprüche, wobei der Sensor (23) oder einer der vorhandenen Sensoren (22, 23) am oder benachbart zu einem Strömungskanal (15) angeordnet ist, in dem die Fluidströmung mittels der Strömungserzeugungseinrichtung (11) erzeugt werden kann.

5. Verfahren nach einem der vorhergehenden Ansprüche, wobei der Zusammenhang (F) durch maschinelles Lernen ermittelt und/oder aktualisiert werden kann.

6. Verfahren nach einem der vorhergehenden Ansprüche, wobei der Zusammenhang (F) zwischen den Eingangsparametern (PIN) und dem wenigstens einen Steuerparameter (CO) mittels einer Steuereinheit (16) der Strömungserzeugungseinrichtung (11) und/oder mittels einer entfernt angeordneten und mit der Strömungserzeugungseinrichtung (11) kommunikationsverbundenen Recheneinrichtung (19) bestimmt wird.

7. Verfahren nach Anspruch 6, wobei die Recheneinrichtung (19) Bestandteil eines Cloud-Services (20) ist.

8. Verfahren nach Anspruch 6 oder 7, wobei die Recheneinrichtung (19) bei der Bestimmung des Zusammenhangs (F) zwischen den Eingangsparametern (PIN) und dem wenigstens einen Steuerparameter (CO) auf Daten mehrerer Strömungserzeugungseinrichtungen (11) zugreifen kann.

9. Verfahren nach einem der vorhergehenden Ansprüche, wobei der Zusammenhang (F) zwischen den Eingangsparametern (PIN) und dem wenigstens einen Steuerparameter (CO) eine Parametermatrix (MX) ist, die Matrixelemente (fij) aufweist, mittels denen die Eingangsparameter (PIN) und der wenigstens eine Steuerparameter (CO) miteinander verknüpft werden.

10. Verfahren nach Anspruch 9, wobei die Parametermatrix (MX) jeden Eingangsparameter (PIN) mit jedem Steuerparameter (CO) mittels jeweils eines individuellen Matrixelements (fij) verknüpft.

11. Verfahren nach Anspruch 9 oder 10, wobei jedes Matrixelement (fij) unabhängig von den anderen Matrixelementen (fij) veränderbar ist.

12. Verfahren nach einem der vorhergehenden Ansprüche, wobei die Strömungserzeugungseinrichtung (11) einen steuerbaren Elektromotor (13) aufweist.

13. Verfahren nach Anspruch 12, wobei der wenigstens eine Steuerparameter (CO) ein elektrischer Parameter zur Steuerung des Elektromotors (13) ist.

14. Vorrichtung (10) aufweisend eine Strömungserzeugungseinrichtung (11), insbesondere einen Kompressors (12), wenigstens einen Sensors (22, 23) und einer Steuereinrichtung (16, 19), die mit dem Sensor (22, 23) und der Strömungserzeugungseinrichtung (11) kommunikationsverbunden ist, wobei die Vorrichtung (10) dazu eingerichtet ist, folgende Verfahrensschritte durchzuführen:
- Betreiben der Strömungserzeugungseinrichtung (11) zur Erzeugung einer Fluidströmung,
- Erfassen einer Vibration mittels des wenigstens einen Sensors (22, 23) und Bereitstellen wenigstens eines die Vibration beschreibenden Sensorsignals (S1, S2) für die Steuereinrichtung (16, 19),
- Ermitteln eines Arbeitspunktes (AP) der Strömungserzeugungseinrichtung (11) mittels der Steuereinrichtung (16, 19),
- Bestimmen eines Zusammenhangs (F) zwischen Eingangsparametern (PIN) und wenigstens einem Steuerparameter (CO) mittels der Steuereinrichtung (16, 19), wobei die Eingangsparameter (PIN) das wenigstens eine Sensorsignal (S1, S2) und den Arbeitspunkt (AP) aufweisen,
- Ermitteln und Verwenden des wenigstens einen Steuerparameters (CO) in der Steuereinrichtung (16, 19) zur Steuerung der Strömungserzeugungseinrichtung (11).

## Claims

1. Method (V) for controlling a flow producing device (11), particularly a compressor (12), comprising:
- operating the flow producing device (11) for creating a fluid flow,
- detecting a vibration by means of at least one sensor (22, 23) and providing at least one sensor signal (S1, S2) describing the vibration,
- determining an operating point (AP) of the flow producing device (11),
- determining a relation (F) between input parameters (PIN) and at least one control parameter (CO), wherein the input parameters (PIN) comprise the at least one sensor signal (S1, S2) and the operating point (AP),
- determining and using the at least one control parameter (CO) for controlling the flow producing device (11).

2. Method according to claim 1, wherein the sensor (22, 23) or one of the provided sensors (22, 23) is a microphone or an oscillation sensor.

3. Method according to claim 1 or 2, wherein the sensor (22) or at least one of the provided sensors (22, 23) is arranged on or adjacent to the flow producing device (11).

4. Method according to one of the preceding claims, wherein the sensor (23) or one of the provided sensors (22, 23) is arranged on or adjacent to a flow channel (15), in which the fluid flow can be created by means of the flow producing device (11).

5. Method according to one of the preceding claims, wherein the relation (F) can be determined and/or updated by means of machine learning.

6. Method according to any of the preceding claims, wherein the relation (F) between the input parameters (PIN) and the at least one control parameter (CO) is determined by means of a control unit (16) of the flow producing device (11) and/or by means of a computing device (19) remotely arranged and communicatively connected with the flow producing device (11).

7. Method according to claim 6, wherein the computing device (19) is part of a cloud service (20).

8. Method according to claim 6 or 7, wherein the computing device (19) can access data of multiple flow producing devices (11) for determination of the relation (F) between the input parameters (PIN) and the at least one control parameter (CO).

9. Method according to any of the preceding claims, wherein the relation (F) between the input parameters (PIN) and the at least one control parameter (CO) is a parameter matrix (MX) comprising matrix elements (fij) by means of which the input parameters (PIN) and the at least one control parameter (CO) are linked with each other.

10. Method according to claim 9, wherein the parameter matrix (MX) links each input parameter (PIN) with each control parameter (CO) by means of an individual matrix element (fij).

11. Method according to claim 9 or 10, wherein each matrix element (fij) can be changed independently from the other matrix elements (fij).

12. Method according to any of the preceding claims, wherein the flow producing device (11) comprises a controllable electric motor (13).

13. Method according to claim 12, wherein the at least one control parameter (CO) is an electrical parameter for controlling the electric motor (13).

14. Device (10) comprising a flow producing device (11), particularly a compressor (12), at least one sensor (22, 23) and a control device (16, 19) that is communicatively connected with the sensor (22, 23) and the flow producing device (11), wherein the device (10) is configured to carry out the following method steps:
- operating the flow producing device (11) for creating a fluid flow,
- detecting a vibration by means of the at least one sensor (22, 23) and providing at least one sensor signal (S1, S2) describing the vibration to the control device (16, 19),
- determining an operating point (AP) of the flow producing device (11) by means of the control device (16, 19),
- determining a relation (F) between input parameters (PIN) and at least one control parameter (CO) by means of the control device (16, 19), wherein the input parameters (PIN) comprise the at least one sensor signal (S1, S2) and the operating point (AP),
- determining and using the at least one control parameter (CO) in the control device (16, 19) for controlling the flow producing device (11).

## Revendications

1. Procédé (V) de commande d'un dispositif de production d'écoulement (11), notamment d'un compresseur (12), comprenant :
- le fonctionnement du dispositif de production d'écoulement (11) aux fins de générer un écoulement de fluide,
- la détection d'une vibration à l'aide d'au moins un capteur (22, 23), et la mise à disposition d'au moins un signal de capteur (S1, S2) décrivant la vibration,
- la détermination d'un point de fonctionnement (AP) du dispositif de production d'écoulement (11),
- la détermination d'une relation (F) entre des paramètres d'entrée (PIN) et au moins un paramètre de commande (CO), les paramètres d'entrée (PIN) comprenant le signal de capteur (S2, S2), au nombre d'au moins un, et le point de fonctionnement (AP),
- la détermination et l'utilisation du paramètre de commande (CO), au nombre d'au moins un, pour la commande du dispositif de production d'écoulement (11).

2. Procédé selon la revendication 1, selon lequel le capteur (22, 23) ou l'un des capteurs (22, 23) présents est un microphone ou un capteur de vibrations.

3. Procédé selon la revendication 1 ou 2, selon lequel le capteur (22) ou l'un des capteurs (22, 23) présents est installé sur le dispositif de production d'écoulement (11) ou à proximité de celui-ci.

4. Procédé selon une des revendications précédentes, selon lequel le capteur (23) ou l'un des capteurs (22, 23) présents est disposé sur ou à proximité d'un conduit d'écoulement (15) dans lequel l'écoulement de fluide peut être généré au moyen du dispositif de production d'écoulement (11).

5. Procédé selon une des revendications précédentes, selon lequel la relation (F) peut être déterminée et/ou mise à jour par apprentissage machine.

6. Procédé selon une des revendications précédentes, selon lequel la relation (F) entre les paramètres d'entrée (PIN) et le paramètre de commande (CO), au nombre d'au moins un, est déterminée à l'aide d'une unité de commande (16) du dispositif de production d'écoulement (11) et/ou à l'aide d'un dispositif de calcul (19) situé à distance et relié sur le plan de la communication au dispositif de production d'écoulement (11).

7. Procédé selon la revendication 6, selon lequel le dispositif de calcul (19) fait partie d'un service cloud (20).

8. Procédé selon la revendication 6 ou 7, selon lequel le dispositif de calcul (19) peut accéder à des données de plusieurs dispositifs de production d'écoulement (11), lors de la détermination de la relation (F) entre les paramètres d'entrée (PIN) et le paramètre de commande (CO), au nombre d'au moins un.

9. Procédé selon une des revendications précédentes, selon lequel la relation (F) entre les paramètres d'entrée (PIN) et le paramètre de commande (CO), au nombre d'au moins un, est une matrice de paramètres (MX) qui présente des éléments de matrice (fij) à l'aide desquels les paramètres d'entrée (PIN) et le paramètre de commande (CO), au nombre d'au moins un, sont combinés entre eux.

10. Procédé selon la revendication 9, selon lequel la matrice de paramètres (MX) combine chaque paramètre d'entrée (PIN) avec chaque paramètre de commande (CO), respectivement à l'aide d'un élément de matrice (fij) individuel.

11. Procédé selon la revendication 9 ou 10, selon lequel chaque élément de matrice (fij) peut être modifié indépendamment des autres éléments de matrice (fij).

12. Procédé selon une des revendications précédentes, selon lequel le dispositif de production d'écoulement (11) présente un moteur électrique (13) pouvant être commandé.

13. Procédé selon la revendication 12, selon lequel le paramètre de commande (CO), au nombre d'au moins un, est un paramètre électrique) pour la commande du moteur électrique (13).

14. Dispositif (10) présentant un dispositif de production d'écoulement (11), notamment un compresseur (12), au moins un capteur (22, 23) et un dispositif de commande (16, 19) qui est relié sur le plan de la communication au capteur (22, 23) et au dispositif de production d'écoulement (11), le dispositif (10) étant conçu pour exécuter les étapes de procédé suivantes :
- fonctionnement du dispositif de production d'écoulement (11) aux fins de générer un écoulement de fluide,
- détection d'une vibration à l'aide du capteur (22, 23), au nombre d'au moins un, et mise à disposition d'au moins un signal de capteur (S1, S2), décrivant la vibration, pour le dispositif de commande (16, 19),
- détermination d'un point de fonctionnement (AP) du dispositif de production d'écoulement (11) à l'aide du dispositif de commande (16, 19),
- détermination d'une relation (F) entre des paramètres d'entrée (PIN) et au moins un paramètre de commande (CO) à l'aide du dispositif de commande (16, 19), les paramètres d'entrée (PIN) comprenant le signal de capteur (S1, S2), au nombre d'au moins un, et le point de fonctionnement (AP),
- détermination et utilisation du paramètre de commande (CO), au nombre d'au moins un, dans le dispositif de commande (16, 19), pour la commande du dispositif de production d'écoulement (11).
